# EUROPEAN PATENT APPLICATION

(11) **EP 1 804 432 A1**
(43) Date of publication of application: **04.07.2007**
(21) Application number: 06741975.4
(22) Date of filing: 24.05.2006
(51) Int. Cl.: H04L 12/54, H04L 12/58, H04L 29/06

(54) **A METHOD FOR LIMITING THE FORWARDING TIMES OF THE MULTIMEDIA MESSAGE FOR THE MULTIMEDIA MESSAGING SERVICE CENTER MMSC AND A SYSTEM THEREOF**

(30) Priority: 27.06.2005 CN 200510079988
(71) Applicant: Huawei Technologies Co., Ltd., Longgang District Shenzhen Guangdong 518129 (CN)
(72) Inventor: CHEN, Kehua, 518129 Shenzhen Guangdong (CN); BAI, Guangchang, 518129 Shenzhen Guangdong (CN); LI, Dawei, 518129 Shenzhen Guangdong (CN); CHENG, Weiming, 518129 Shenzhen Guangdong (CN)
(74) Representative: Thun, Clemens
(86) International application number: PCT/CN2006/001087
(87) International publication number: WO 2007/000091

(57) **Abstract**

The present invention provides methods a system and a multimedia messaging service center (MMSC) that limits the times that a multimedia message can be forwarded among several MMSCs, including adding a forward counter field in a multimedia message and assigning an initial value to the forward counter field; updating the value of the forward counter field which keeps track the times that the multimedia message has been forwarded each time the multimedia message being forwarded; and stopping forwarding the multimedia message, if the value of the forward counter field reaches a predefined value. According to the above method and system the times of forwarding a multimedia message by the MMSC can be limited and the resource of the MMS system is greatly saved.

## Description

### Field of the Technology

This invention relates to message handling technology for a multimedia messaging service (MMS) system. In particular, this invention relates to a method and a system which can limit the times that a multimedia message can be forwarded in a multimedia messaging service center (MMSC).

### Background of the Invention

A multimedia messaging service (MMS) is a further development of a short messaging service (SMS) and an enhanced messaging service (EMS). An MMS provides a completed end-to-end solution for personal multimedia mobile communication services. In view of the contents of communications, a multimedia message includes pictures, audio, video and data. In view of the capabilities, a multimedia message covers various types of multimedia communications including terminal-to-terminal, terminal-to-application server, and application server-to-terminal. Thus the multimedia messaging services not only accomplishes message exchanges among the terminals and/or between the terminal and the application server, but also combines multiple contents such as picture, voice, video, data and/or text. Used as an open interface for media, an MMS system can provide various rich content services via interactions between a mobile user and an internet content provider. A user is not only an MMS customer, but also can be an MMS content developer. Doubtlessly, this will increase the interests for end users' services in the multimedia marketplace.

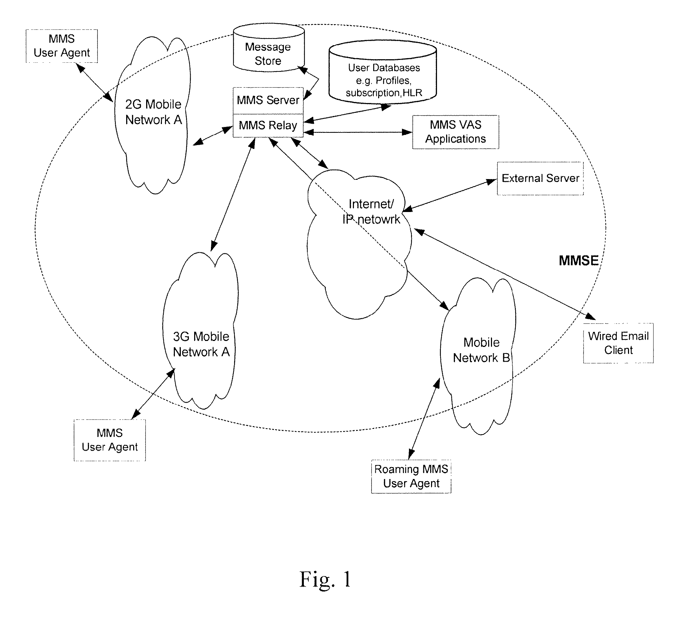

Figure 1 depicts the conventional MMS system configuration. As shown in Figure 1, the MMS system includes various network types, such as 2G mobile networks, 3G mobile networks, internets, and etc. The network interface is accommodated via internet protocols as well as other related network message protocols. In addition, the multimedia message transfer protocols on the 2G/3G mobile network can be compatible with the existing multimedia message transfer protocols on the internet. The main elements in an MMS system shown in Figure 1 are described as follows:

At the terminal side:

An MMS User Agent (MMS UA) is installed to provide multimedia messaging services. An MMS User Agent is one of applications on the user terminal, which provides capabilities for viewing, editing, handling multimedia messages. It can send, receive and delete multimedia messages. An MMS User Agent can support the Multipurpose Internet Mail Extensions (MIME) protocols. Multimedia messages are represented in the MIME format. Based on various types of fields, a multimedia message may contain text, picture, audio and/or video information.

A wired email client installed at the terminal side is used to communicate with the MMS systems via email, e.g., an email flow from a terminal or to a terminal.

At the network side, the MMS system contains primarily a Multimedia Messaging Service Environment (MMSE). An MMSE is a complete and independent group that combines various network elements. It includes as follows.

An MMS Relay/Server: an MMS relay/server performs the protocol transformation, content arrangement, storing and dispatching for a multimedia message among different multimedia equipment. It can also generate charging details.

An MMS User Databases: an MMS user databases are used to store customer information, personal profile, interface properties. For example, it may have the capabilities profile for a mobile terminal, or the subscription information of a user, the home location register (HLR) information of a user.

A Message Store: a message store is used to store multimedia information of a user. Due to usually large size of multimedia information and the limited storage space in a user terminal, a user can store information in a message store, such as the dream network album in China Mobile Co.

The MMS relay/servers, the MMS user databases and the message stores form the core entities of an MMS system, i.e., a multimedia messaging service center (MMSC).

An MMS External Value Added Service Application (VAS Application): the MMS VAS Application usually abbreviated as SP/CP, belongs to a value added service provider (VASP) that provides various value added services for multimedia messaging services.

An External Server: an external server provides other services that are related to the multimedia messaging services, such as a prepaid platform, data service management platform, and etc.

A service provider needs to have several MMSCs to separately provide a service to customers when a service is actually offered. Each MMSC manages part of customers and provides access capabilities only for those customers.

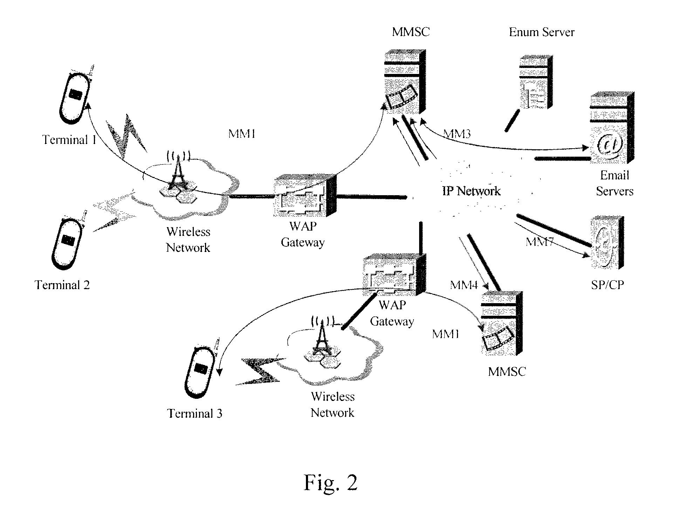

Figure 2 depicts conventional various network elements in an MMS system that has multiple MMSCs interconnected. As shown in Figure 2, an MMSC is communicated with the user terminal through a Wireless Application Protocol (WAP) gateway via the MM 1 protocol. An MMSC is communicated with an Email Server in an IP Network via the MM3 protocol and emails are carried via the Simple Mail Transfer Protocol (SMTP). An MMSC and a SP/CP are communicated via the MM7 protocols and their messages are carried via the Hypertext Transfer Protocol (HTTP) or other protocols. An MMSC is communicated with other MMSCs via the MM4 protocol and their messages are carried via SMTP protocols. Sending a multimedia message also needs an Enum Server to process the E.164 address for analyzing the domain name. The Enum Server can examine the recipient's terminal number to determine a proper routing. It informs the MMSC whether a message needs to be forwarded or not. If so, it indicates which MMSC the message should be forwarded to.

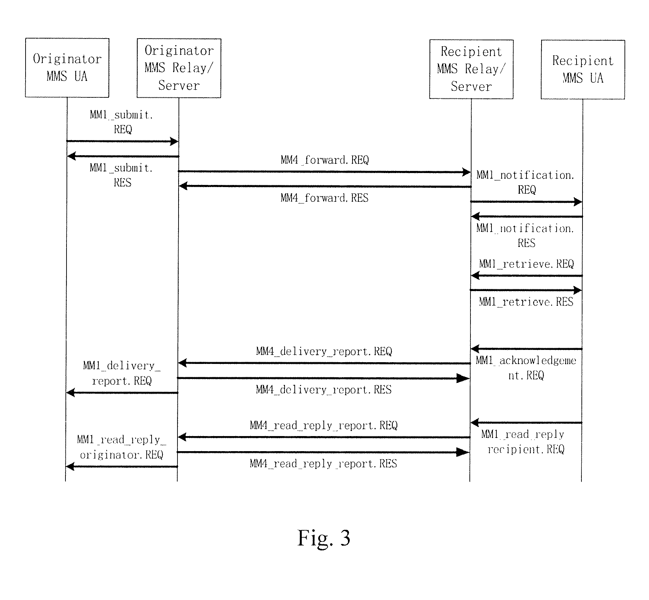

The message exchanges are done via the MM4 interface among multiple MMSCs. Figure 3 shows a conventional message exchange sequence for multimedia messages using the existing MM4 interface protocol. As shown in Figure 3, at the originator MMSC, upon receiving a submit request (MM1_submit.Req) from an originator MMS UA, the originator MMS relay/server finds out the forwarding route from the Enum Server, then forwards the multimedia message plus its relevant property information via the MM4_forward.REQ message. Here, the word "forward" is the same as "resend" or "retransmit". After being forwarded through several MMSCs, the message is received by the recipient MMSC. The recipient MMS relay/server then delivers the multimedia message to the recipient user terminal and also responds to the originator MMSC with the MM4_forward.RES message. When the recipient MMSC receives the received acknowledgement (MM1_acknowlegement.REQ) from the recipient terminal, it sends back the MM4_delivery_report.REQ message to the originator MMSC. Upon receiving this message, the originator MMSC responds the recipient MMSC with an MM4_delivery_report.RES and also sends the MM1_delivery_report.REQ to the originator terminal. When the recipient MMSC receives the MM1_read_reply_recipent.REQ from the recipient terminal, it sends the MM4_read_reply_report.REQ message to the originator MMSC. Upon receiving this message, the originator MMSC responds the MM4_read_reply_report.RES to the recipient MMSC and also sends the MM1_read_reply_originator.REQ message to the originator terminal.

In this procedure, if the originator MMSC and the recipient MMSC are not the same MMSC, the originator MMSC needs to retransmit the messages in the MM4 protocol to other MMSCs. However, in the existing procedure, there is no scheme to limit the times of retransmitting a multimedia message among several MMSCs.

The inventor(s) of the present application, according to certain embodiments of the present invention, discovered the following issues. If the static routing tables are adapted in these interconnected MMSCs, it may cause a multimedia message is retransmitted back and forth infinitely among two or more MMSCs when their routing tables are incorrectly arranged. This retransmission can occupy a lot of system resources in the MMSC and waste resources undetected. Hence it is highly desirable to improve message handling techniques for a multimedia messaging service.

### Summary of the Invention

The present invention proposes a method for limiting the times that a multimedia message can be forwarded in an MMSC to save resources of the MMS system according to an embodiment.

The present invention also provides a system and an MMSC for limiting the times that a multimedia message can be forwarded in an MMSC to save resources of the MMS system according to an embodiment.

The present invention proposes the following method according to an embodiment.

A method for limiting the number of times of forwarding a multimedia message by MMSCs, including: adding a forward counter field in the multimedia message; updating the value of the forward counter field which keeps track the number of times that the multimedia message has been forwarded each time the multimedia message being forwarded; and stopping forwarding the multimedia message, if the value of the forward counter field reaches a predefined value.

The method specifically includes:
A. adding the forward counter field in the multimedia message and assigning an initial value to the forward counter field by an originator MMSC, forwarding the multimedia message to a next MMSC and taking the next MMSC as a present MMSC;
B. obtaining the forward counter field from the multimedia message by the present MMSC, determining the number of times that the multimedia message has been forwarded according to the value of the forward counter field, determining whether the number of times that the multimedia message has been forwarded reaches the predefined value, if yes, updating the value of the forward counter field according a updating rule, forwarding the multimedia message to a next MMSC, and taking the next MMSC as the present MMSC, and returning to step B; otherwise, rejecting to process the multimedia message.

Preferably, before obtaining the forward counter field from the multimedia message, the method further includes the process of determining whether the multimedia message contains the forward counter field; if there is no forward counter field in the multimedia message, adding a forward counter field in the multimedia message, assigning an initial value to the forward counter field, forwarding the multimedia message to a next MMSC, taking the next MMSC as the present MMSC, and returning to step B; or if there is a forward counter field in the multimedia message, proceeding to step B.

Preferably, the initial value assigned to the forward counter field is 1; the method further includes: determining whether the value of the forward counter field equals to or less than 0; and setting the value of the forward counter field to 1, if the value of the forward counter field equals to or less than 0.

Preferably, the method further includes: determining whether a recipient user terminal of the multimedia message belongs to the originator MMSC; delivering the multimedia message directly to the recipient user terminal and exiting the forwarding process, if the recipient user terminal for the multimedia message belongs to the originator MMSC; or proceeding to step B, if the recipient user terminal for the multimedia message does not belong to the originator MMSC.

Preferably, before obtaining the forward counter field from the multimedia message by the present MMSC, the method further includes: determining whether a recipient user terminal of the multimedia message belongs to the present MMSC; delivering the multimedia message directly to the recipient user terminal and exiting the forwarding process, if the recipient user terminal for the multimedia message belongs to the present MMSC; or adding a forward counter field in the multimedia message, and proceeding to the subsequent process, if the recipient user terminal for the multimedia message does not belong to the present MMSC.

Preferably, before forwarding the multimedia message to a next MMSC, the method further includes: determining whether a recipient user terminal for the multimedia message belongs to the present MMSC; delivering the multimedia message directly to the recipient user terminal and exiting the forwarding process if the recipient user terminal for the multimedia message belongs to the present MMSC; or proceeding to the process of updating the value of the forward counter field according a updating rule and the subsequent process, if the recipient user terminal for the multimedia message does not belong to the present MMSC.

Preferably, the process of updating the value of the forward counter field comprises: increasing the value of the forward counter field.

Preferably, the process of updating the value of the forward counter field comprises: decreasing the value of the forward counter field.

Preferably, the multimedia message is in MM4 protocol format.

Preferably, the multimedia message in MM4 protocol format is a forward request message, i.e., MM4_forward.REQ, and the new added forward counter field in the forward request message is MM4_forward_counter.

A system for limiting the number of times of forwarding a multimedia message by a multimedia messaging service center (MMSC), including: an adding element configured to add a new forward counter field in a multimedia message and set an initial value to the forward counter field; a updating element configured to update the value of the forward counter field to keep track the number of times that the multimedia message has been forwarded; and a first judging element configured to determine the value of the forward counter, and stop forwarding that message, if the value of the forward counter reaches a predefined value.

Preferably, the system further includes: a second judging element configured to determine whether the multimedia message has the forward counter field, trigger the updating element to update the number of times that a multimedia message can be forwarded recorded in the forward counter field, if determining that the multimedia message has a forward counter field, the second judging element; or trigger the adding element to add a forward counter field in the multimedia message, if determining that the multimedia message has no forward counter field.

Preferably, the initial value set to the forward counter field by the adding element is 1; and the first judging element is further configured to trigger the adding element to set the value of the forward counter field to 1, when determining the value of the forward counter field is equal to or less than 0.

Preferably, the multimedia message to be forwarded by the MMSC is in the MM4 protocol format.

Preferably, the multimedia message in the MM4 protocol format is a forward request message, i.e., MM4_forward.REQ, and the new added forward counter field in the forward request message is MM4_forward_counter.

In the present invention, the new forward counter field is added in the forward request message in the MM4 protocol by the MMSC. Each time the forward request message is forwarded, the forward counter field is updated to keep track the times that a message has been forwarded. If the times that the multimedia message has been forwarded reach a predefined value, the MMSC stops forwarding that message. This method can limit the times that a multimedia message can be forwarded among several MMSCs, thus the method can avoid a message is forwarded in cycling infinitely and waste resources in an MMS systems. Furthermore, an administrator of MMS system may detect routing errors by tracing values of forward counters and the relevant MMSCs. Thus, the invention may also help resolving the routing trouble.

### Brief Description of the Drawings

Figure 1 illustrates the main elements in a conventional MMS system architecture;
Figure 2 illustrates a conventional MMS system network configuration that multiple MMSCs are interconnected via various protocol interfaces;
Figure 3 illustrates the conventional message flow sequences for handling a multimedia message via an MM4 interface protocol;
Figure 4 illustrates a flow diagram for the originator MMSC handling and delivering a multimedia message according to an embodiment of the present invention; and
Figure 5 illustrates a flow diagram for the relay MMSC or the recipient MMSC handling and delivering a multimedia message according to an embodiment of the present invention.

### Detailed Description of the Invention

With reference to the figures, embodiments of the present invention are illustrated as follows.

According to an embodiment of the present invention, a new forward counter field is added in a multimedia message in the MM4 protocol. Each time the multimedia message is forwarded, the forward counter field is updated by the MMSC to keep track the times that the multimedia message has been forwarded. And if the times that the multimedia message has been forwarded reach a predefined value, the MMSC stops forwarding that message.

In this embodiment, as an example for illustration, an MMSC receives a multimedia message from an originator user terminal. This multimedia message is retransmitted by one or more relay MMSCs and eventually reaches the recipient MMSC.

Upon receiving a multimedia message, the current MMSC first determine the sender. If that message is an MM1 message from a user terminal, the current MMSC is the originator MMSC of that message. Thus, the current MMSC conducts the delivery procedures as the originator MMSC. If that message is a forwarding MM4 message from another MMSC, then the current MMSC is either a relay or a recipient MMSC. Thus, the current MMSC conducts the relay or receiving procedures.

The above mentioned MM1 message is a message sent from a user terminal to an MMSC in an MM1 protocol, such as a multimedia submit request message (MM1_submit.REQ), a multimedia notification response message (MM1_notification.RES), a multimedia retrieve request message (MM 1_retrieve.REQ), a multimedia acknowledgement request (MM1_acknowledgement.REQ), and a multimedia read reply from recipient request message (MM1_read_reply_recipient.REQ). The above mentioned MM4 messages are messages transmitted between MMSCs, such as a multimedia forward request message (MM4_forward.REQ), a multimedia forward response message (MM4_forward.RES), a multimedia delivery report request (MM4_delivery_report.REQ), a multimedia delivery report response message (MM4_delivery_report.RES), a multimedia read reply report request message (MM4_read_repIy_report.REQ), and a multimedia read reply report response message (MM4 read_reply_report.RES).

The following example illustrates the situation that an MMSC receives an MMl_submit.REQ message and sends an MM4_forward.REQ message to another MMSC.

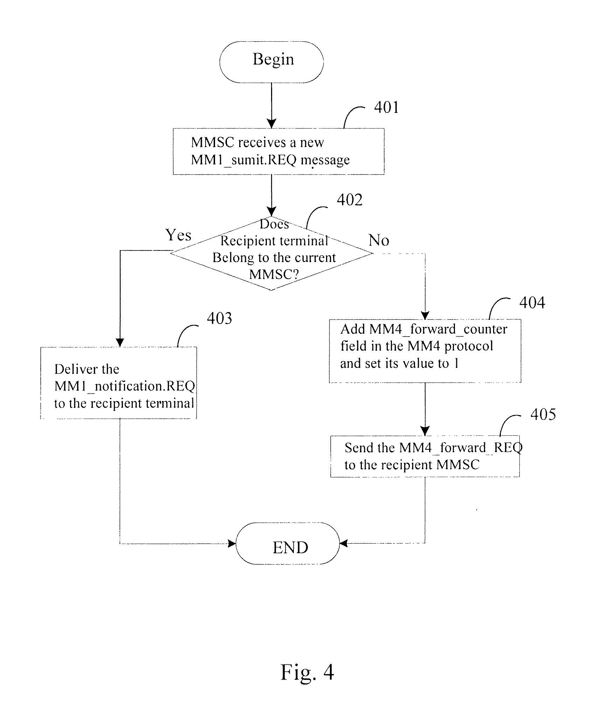

Figure 4 depicts a flow chart for an originator MMSC handling and submitting a multimedia message according to an embodiment of the present invention. As shown in Figure 4, the flow chart includes:
Step 401: the originator MMSC receives a multimedia message in the MM 1 protocol from an originator terminal. In this example, an MM1_submit.REQ is received, which contains a multimedia information and recipient terminal information.
Steps 402 and 403: the Enum Server in the originator MMSC looks up the required routing according to the recipient terminal address in the MM1 message received. Based on the routing result, the Enum Server determines whether the recipient user terminal belongs to the same MMSC. If so, it sends the MM1 message directly to the recipient terminal and completes the process. In this embodiment, the MMSC receives an MM1_submit.REQ, thus MMSC sends an MM1 multimedia notification request message (MM 1_notification.REQ) to recipient terminal to ask the recipient obtaining the multimedia information at the same MMSC. If the MMSC receives an MM1_acknowledgement.REQ message, then the MMSC sends an MM1_delivery_report.REQ to the originator user terminal. If the MMSC receives an MM1_read_reply_recipient.REQ message, then the MMSC sends the corresponding MM1 read replay message to the originator terminal (MM 1_read_reply_originator.REQ).

If the recipient user terminal does not belong to the same MMSC, the current MMSC need to convert the content of the MM1 message to an MM4 message and send it to the recipient MMSC (Step 404). In this embodiment, the MMl_submit.REQ message is converted to the MM4 _forward.REQ message before being sent out.
Step 404: the originator MMSC adds a forward counter field in the MM4 message, i.e., the MM4_forward_counter field, and sets its value to 1. This counter is used to keep track the times that the multimedia message has been forwarded.
Step 405: according to the routing results from Step 402, the current MMSC forwards the modified MM4 message to the next MMSC.

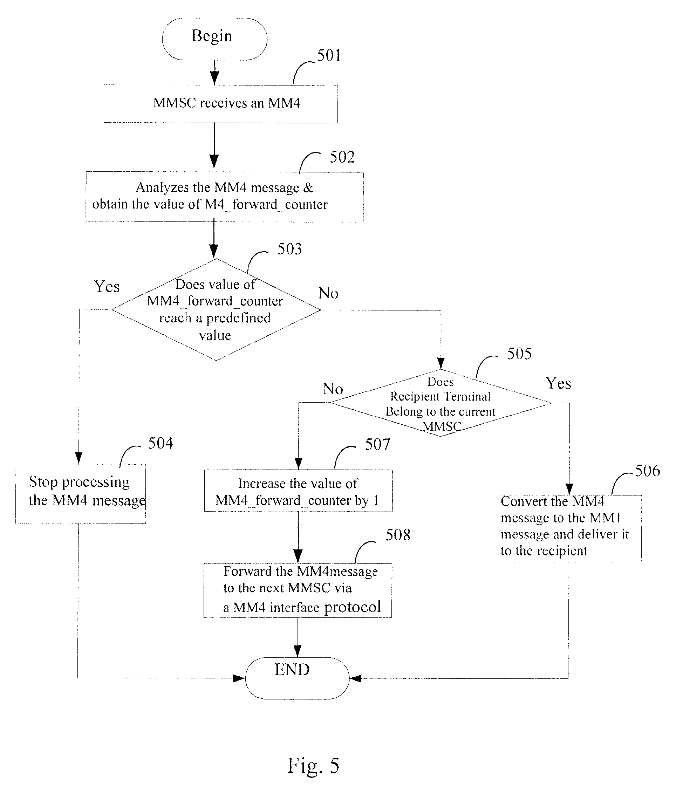

Figure 5 illustrates a flow diagram for a relay/recipient MMSC handling and delivering a multimedia message according to an embodiment of the present invention. As shown in Figure 5, the flow diagram includes the following Steps.
Step 501: the current MMSC receives an MM4 message from another MMSC. In this embodiment, the receiving message is an MM4_forward.REQ message.
Step 502: the MMSC analyzes the MM4 message and obtains the value of the forward counter.

If the received MM4 message comes from an MMSC that does not support the forward counter feature, then the message does not have the forward counter field. In this case, Step 502 needs to first determine whether the MM4 message contains a forward counter field. If so, it analyzes the value, otherwise the current MMSC adds a forward counter field in the received MM4 message and sets the value to 1.

In a usual case, the value of forward counter can not be less than 0. However, to avoid another MMSC incorrectly entering value less than or equal to 0, this embodiment of the invention may add another step before Steps 503 and 504, the new step can determine whether the forward counter is less than or equal to 0. If so, the new step re-sets the value of the forward counter to 1, then proceeds with Steps 503 and 504; otherwise, proceeds directly with Steps 503 and 504.
Steps 503 & 504: the current MMSC determines whether the value of the forward counter reaches the predefined value. If so, the MMSC terminates the process of the MM4 message, otherwise continue with Step 505.
Step 505 & 506: the Enum Server in the current MMSC finds the routing based on the recipient terminal's address information in the MM4 message received. The current MMSC determines whether the recipient terminal belongs to the same MMSC based on the result of routing inquiry. If so, the MMSC needs not forward the MM4 message, instead it delivers the corresponding MM1 message directly to the recipient user terminal. In this embodiment, the MM4_forward.REQ is received, thus the corresponding MM1 message is the multimedia notification request message (MM1_notification.REQ) that is sent to the recipient terminal to obtain the multimedia information in the current MMSC. The process is done.

If the recipient terminal does not belong to the current MMSC, the MMSC performs Step 507.
Step 507: Increases the value of MM4_forward_counter by 1 in the MM4_forward.REQ message.

In this embodiment, the value of MM4_forward_counter is increased by 1 to keep track the times that a multimedia message has been forwarded by the MMSC. Obviously, we may choose to decrease the value of MM4_forward_counter by 1 if the counter is initially set to the maximum time that the multimedia message allowed to be forwarded. If the value becomes 0, the MMSC stops forwarding the message. Also, we may use other rule to update the value of MM4_forward_counter, as long as we can determine the times that a message has been forwarded.
Step 508: According the routing results from Step 505, the current MMSC sends the updated MM4_forward.REQ message to the next MMSC.

In this flow diagram, we can perform Step 505 after completing Step 501. If the recipient terminal belongs to the same MMSC, then perform Step 506. If the recipient terminal does not belong to the same MMSC, then perform Step 502 and the rest of steps. And when Step 503 is executed, if the value of MM4_forward_counter does not reach the predefined value, we continue with Step 507 and the rest of Steps. In this manner, we can also accomplish the same goal for this invention.

Another embodiment of the present invention provides a system for limiting the times that a multimedia message can be forwarded in an MMSC, which includes: an adding element, for adding a new forward counter field in a multimedia message and setting the value of the forward counter field; a updating element, for updating the forward counter field to keep track the times that the multimedia message has been forwarded, each time the multimedia message is forwarded; and a first judging element, for determining the times that the multimedia message has been forwarded. and if the times that the multimedia message has been forwarded reach the predefined value, stopping forwarding that message.

The above system may further include a second judging element, for determining whether the received multimedia message has a forward counter field. If determining that the received multimedia message has a forward counter field, the second judging element triggers the updating element to update the times that a multimedia message can be forwarded recorded in the forward counter field; while on the other hand the second judging element triggers the adding element to add a forward counter field in the received multimedia message.

In another embodiment, the adding element sets the value of the forward counter field to 1, and the second judging element is further configured to determine whether the value of the forward counter field is less than or equal to 0, if so the second judging element triggers the adding element to set the value of the forward counter field to 1.

As cited above, the multimedia message forwarded by the MMSC is a message in MM4 protocol, i.e. a multimedia forward request. And the new added forward counter field in the forward request message is MM4_forward_counter field.

The above description is one of the preferred embodiments for this invention and the accompanying figures are only intended to illustrate this invention as an example. Various changes and modifications on the above method are possible and are within the scope of this invention.

## Claims

1. A method for limiting the times of forwarding a multimedia message by multimedia messaging service centers <MMSCs>, comprising:
adding a forward counter field in a multimedia message;
updating the value of the forward counter field which keeps track the times of that the multimedia message has been forwarded, each time the multimedia message being forwarded; and
stopping forwarding the multimedia message, if the value of the forward counter field reaches a predefined value.

2. The method as claimed in Claim 1, wherein the method comprises:
A. adding the forward counter field in the multimedia message and assigning an initial value to the forward counter field by an originator MMSC, forwarding the multimedia message to a next MMSC and taking the next MMSC as a present MMSC;
B. obtaining the forward counter field from the multimedia message by the present MMSC, determining the number of times that the multimedia message has been forwarded according to the value of the forward counter field, determining whether the number of times that the multimedia message has been forwarded reaches the predefined value, if yes, updating the value of the forward counter field according a updating rule, forwarding the multimedia message to a next MMSC, and taking the next MMSC as the present MMSC, and returning to step B; otherwise, rejecting to process the multimedia message.

3. The method as claimed in Claim 2, further comprising:
determining whether the multimedia message contains the forward counter field,
if there is no forward counter field in the multimedia message, adding a forward counter field in the multimedia message, assigning an initial value to the forward counter field, forwarding the multimedia message to a next MMSC, taking the next MMSC as the present MMSC, and returning to step B;
if there is a forward counter field in the multimedia message, proceeding to step B.

4. The method as claimed in Claim 2, wherein the initial value assigned to the forward counter field is 1; the method further comprises:
determining whether the value of the forward counter field equals to or less than 0; and
setting the value of the forward counter field to 1, if the value of the forward counter field equals to or less than 0.

5. The method as claimed in Claim 2, further comprising:
determining whether a recipient user terminal of the multimedia message belongs to the originator MMSC;
delivering the multimedia message directly to the recipient user terminal and exiting the forwarding process, if the recipient user terminal for the multimedia message belongs to the originator MMSC; or
proceeding to step B, if the recipient user terminal for the multimedia message does not belong to the originator MMSC.

6. The method as claimed in Claim 2, before obtaining the forward counter field from the multimedia message by the present MMSC, further comprising:
determining whether a recipient user terminal of the multimedia message belongs to the present MMSC;
delivering the multimedia message directly to the recipient user terminal and exiting the forwarding process, if the recipient user terminal for the multimedia message belongs to the present MMSC; or
adding a forward counter field in the multimedia message, and proceeding to the subsequent process, if the recipient user terminal for the multimedia message does not belong to the present MMSC.

7. The method as claimed in Claim 2, before forwarding the multimedia message to a next MMSC, further comprising:
determining whether a recipient user terminal for the multimedia message belongs to the present MMSC;
delivering the multimedia message directly to the recipient user terminal and exiting the forwarding process if the recipient user terminal for the multimedia message belongs to the present MMSC; or
proceeding to the process of updating the value of the forward counter field according a updating rule and the subsequent process, if the recipient user terminal for the multimedia message does not belong to the present MMSC.

8. The method as claimed in Claim 2, wherein the process of updating the value of the forward counter field comprises: increasing the value of the forward counter field.

9. The method as claimed in Claim 2, wherein the process of updating the value of the forward counter field comprises: decreasing the value of the forward counter field.

10. The method as claimed in any of Claim 1 to 9, wherein the multimedia message is in MM4 protocol format.

11. The method as claimed in Claim 10, wherein the multimedia message in MM4 protocol format is a forward request message, i.e., MM4_forward.REQ, and the new added forward counter field in the forward request message is MM4_forward_counter.

12. A system for limiting the times of forwarding a multimedia message by a multimedia messaging service center (MMSC), comprising:
an adding element configured to add a new forward counter field in a multimedia message and set an initial value to the forward counter field;
a updating element configured to update the value of the forward counter field to keep track the times that the multimedia message has been forwarded;
a first judging element configured to determine the value of the forward counter, and stop forwarding the multimedia message, if the value of the forward counter reaches a predefined value.

13. The system as claimed in Claim 12, further comprising:
a second judging element configured to
determine whether the multimedia message has a forward counter field,
trigger the updating element to update the times that a multimedia message can be forwarded recorded in the forward counter field, if determining that the multimedia message has a forward counter field, or
trigger the adding element to add a forward counter field in the multimedia message, if determining that the multimedia message has no forward counter field.

14. The system as claimed in Claim 12, wherein the initial value set to the forward counter field by the adding element is 1;
the first judging element is further configured to trigger the adding element to set the value of the forward counter field to 1 when determining the value of the forward counter field is equal to or is less than 0.

15. The system as claimed in any of Claim 12 to 14, wherein the multimedia message to be forwarded by the MMSC is in the MM4 protocol format.

16. The system as claimed in Claim 15, wherein the multimedia message in the MM4 protocol format is a forward request message, i.e., MM4_forward.REQ, and the new added forward counter field in the forward request message is MM4_forward_counter.
